Europäisches Patentamt

European Patent Office

Office européen des brevets

(19)

(11) EP 0 588 673 B1

(12) FASCICULE DE BREVET EUROPEEN

(45) Date de publication et mention
de la délivrance du brevet:
**29.10.1997 Bulletin 1997/44**

(51) Int Cl.6: **C08G 79/08**

(21) Numéro de dépôt: **93402029.8**

(22) Date de dépôt: **09.08.1993**

(54) **Procédé de préparation de polyaminoborazines**

Verfahren zur Herstellung von Polyaminoborazinen

Process for the production of polyaminoborazines

(84) Etats contractants désignés:
DE FR GB

(30) Priorité: **15.09.1992 FR 9210952**

(43) Date de publication de la demande:
**23.03.1994 Bulletin 1994/12**

(73) Titulaire: **RHONE-POULENC CHIMIE**
**92408 Courbevoie Cédex (FR)**

(72) Inventeurs:
• **Mignani, Gérard**
**F-69008 Lyon (FR)**
• **Richard, Christophe**
**F-69960 Corbas (FR)**
• **Trichon, Roger**
**F-69100 Villeurbanne (FR)**

(74) Mandataire: **Dubruc, Philippe et al**
**RHONE-POULENC CHIMIE,**
**Direction de la Propriété Industrielle,**
**25, Quai Paul Doumer**
**92408 Courbevoie Cédex (FR)**

(56) Documents cités:
**EP-A- 0 104 412**

• **JOURNAL OF POLYMER SCIENCE, POLYMER**
**CHEMISTRY EDITION vol. 24 , 1986 , NEW YORK**
**US pages 173 - 185 PACIOREK ET AL.**
**'Boron-Nitrogen Polymers.I.Mechanistic**
**Studies of Borazine Pyrolyses'**

## Description

La présente invention concerne un procédé de préparation de polyaminoborazines.

Elle concerne également les polyaminoborazines susceptibles d'être obtenues par la mise en oeuvre du procédé selon l'invention.

Elle vise enfin, à titre d'application, l'utilisation de ces polymères pour la fabrication de produits et articles céramiques à base de nitrure de bore, notamment sous forme de fibres, de films, de matrices, de revêtements, de poudres et de pièces massives.

Afin d'obtenir un polymère précurseur de matériaux céramiques à base de nitrure de bore dont la tenue à la pyrolyse et donc le rendement pondéral en nitrure de bore sont améliorés, il est connu de polycondenser thermiquement des aminoborazines trifonctionnelles. On a ainsi décrit, dans les demandes de brevets et brevets EP 0342673, GB 2163761 et EP 0384857, la polycondensation thermique de différentes aminoborazines en présence ou en absence d'une amine lourde.

Cependant, les polyaminoborazines obtenues présentent l'inconvénient de ne pas être homogènes, c'est à dire que ces polymères présentent une répartition polydisperse de leur masse moléculaire, favorisant la formation de gels. Cette formation de gels a pour conséquence de rendre la mise en forme de ces polymères délicate, voire difficile, et d'aboutir à des matériaux, mis en forme à partir de ces polymères, dont les propriétés mécaniques ne sont pas satisfaisantes. Du fait de leur non homogénéïté, ces polyaminoborazines peuvent être également insolubles partiellement et/ou fusibles à des températures trop élevées pour rendre leur mise en forme aisée.

Il est donc souhaitable et c'est un des buts de la présente invention de pouvoir disposer de polymères homogènes, c'est à dire qu'ils présentent une répartition de leur masse moléculaire monodisperse, de manière à éviter les inconvénients indiqués ci-dessus.

Un autre but de la présente invention est de fournir avec un taux de transformation élevé un polyaminoborazine conduisant, après pyrolyse, au matériau céramique avec un rendement pondéral élevé.

Ces buts et d'autres sont atteints par la présente invention qui concerne en effet un procédé de préparation de polyaminoborazines du type consistant à polycondenser thermiquement des aminoborazines trifonctionnelles de structure cyclique de formule générale (1) suivante:

$$[-B(NR_1R_2)-NR_3-]_3,$$

formule (1) dans laquelle $R_1$, $R_2$ et $R_3$, identiques ou différents, représentent l'hydrogène, un radical alkyle saturé ou insaturé ou un radical aryle, procédé dans lequel, dans le but d'obtenir des polyaminoborazines homogènes, la réaction de polycondensation est réalisée à l'équilibre.

Les aminoborazines trifonctionnelles de formule (1) sont des produits bien connus et sont notamment décrites dans R. Toeniskoetter et Coll., Inorg. Chem., $\underline{2}$ (1963), page 29; le brevet US 2754177; K. Niedenzu et Coll. Chem. Ber. (1960), $\underline{94}$, page 671 et K. Niedenzu et Coll. J. Am. Chem. Soc. (1959), $\underline{20}$, page 3561.

Les aminoborazines utilisées dans le procédé de la présente invention peuvent également se trouver sous la forme de mélanges de monomères, de dimères, et éventuellement de trimères de ces aminoborazines trifonctionnelles.

De préférence, on utilise des aminoborazines trifonctionnelles de formule (1) dans laquelle $R_3$ est l'hydrogène et/ou $R_1$ et $R_2$ sont des radicaux alkyle, de façon plus préférée saturés.

De manière encore plus préférentielle, $R_1$ et $R_2$ sont des radicaux alkyle saturés de $C_1$ à $C_4$. On peut notamment citer les radicaux méthyle, éthyle ou propyle.

La Demanderesse a donc découvert de façon surprenante et avantageuse que l'équilibre de la réaction de polycondensation des aminoborazines trifonctionnelles peut être réalisé et que cet équilibre permet de contrôler la polymérisation des aminoborazines trifonctionnelles. Les polyaminoborazines ainsi obtenues sont plus particulièrement fusibles et/ou solubles dans la plupart des solvants usuels, tels que le tétrahydrofurane, le diméthylacétamide ou le chloroforme.

Ainsi, et sans vouloir se lier à une quelconque théorie de l'invention, il semble nécessaire d'indiquer que la réaction principale d'accès aux polyaminoborazines par polycondensation thermique peut s'écrire de la manière suivante:

aminoborazines trifonctionnelles ↔ polyaminoborazines + amines.

La température et la pression partielle en amines produites lors de la polycondensation sont les facteurs physiques de cet équilibre. Ces facteurs doivent être par conséquent controlés, plus particulièrement, la pression partielle en amines doit être différente de 0.

Cet équilibre réactionnel peut être avantageusement déplacé à volonté dans le sens de la réaction de la polycondensation en faisant varier soit la température du milieu réactionnel, soit la pression partielle en amines produites lors de la polycondensation, tout en laissant varier ou en variant l'autre paramètre.

Selon un mode préféré de mise en oeuvre de la présente invention, l'équilibre est réalisé par augmentation de la température, si on laisse la pression partielle en amines produites augmenter. Ce mode préféré est mis en oeuvre par tout moyen connu en soi, plus particulièrement, par substitution naturelle du gaz inerte présent dans le réacteur au départ par les amines produites lors de la polycondensation, tout en augmentant la température.

L'état de la technique, au contraire, décrit un balayage sous atmosphère inerte lors de la polycondensation thermique, ce qui équivaut à imposer une pression partielle en amines produites nulle, alors que la température de polycondensation est fixée.

Les gaz inertes les plus utilisés sont l'azote et l'argon.

La polycondensation thermique des aminoborazines est généralement réalisée à une température comprise entre 150°C et 350°C, de préférence à une température comprise entre 200°C et 250°C.

Le procédé selon l'invention est réalisé en masse ou en solution dans un solvant aprotique polaire (diméthyléthylèneurée ou N-méthylpyrollidone, par exemple) ou apolaire (chlorobenzène ou hexane, par exemple) et sous conditions anhydres.

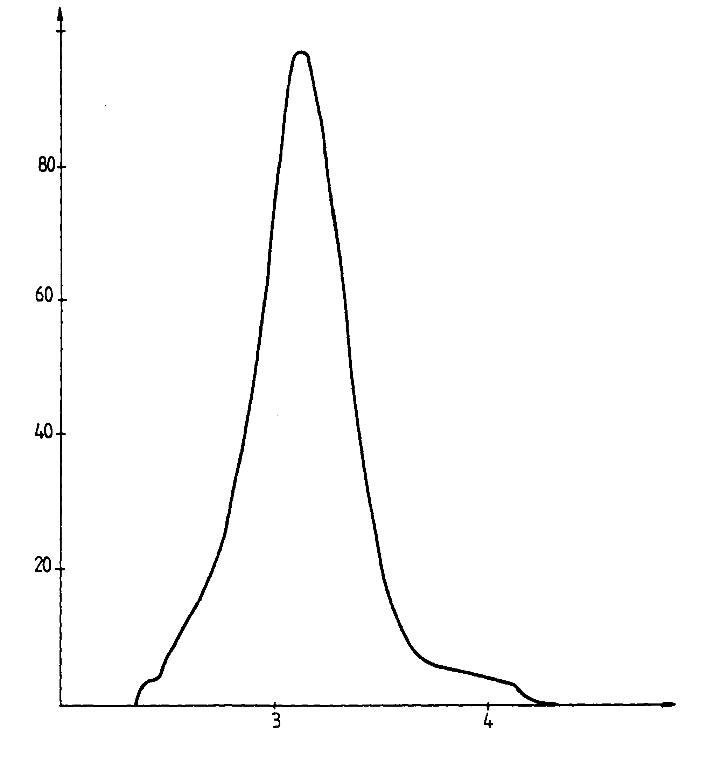

La figure unique est un chromatogramme de la chromatographie par perméation de gel de polyaminoborazines obtenues selon le procédé de la présente invention.

L'homogénéïté des polyaminoborazines obtenues selon le procédé de la présente invention, après éventuellement élimination du solvant (distillation ou autres), se constate en interprétant les chromatogrammes des chromatographies par perméation de gel des polyaminoborazines obtenues selon le procédé de la présente invention. Cette homogénéïté est notamment illustré par la figure unique.

La présente invention concerne également les polyaminoborazines susceptibles d'être obtenues par la mise en oeuvre du procédé décrit auparavant. Ces polyaminoborazines présentent l'avantage d'être homogènes.

Compte tenu de leur qualité, les polyaminoborazines obtenues selon le procédé de la présente invention trouvent une application toute particulière pour la fabrication de produits céramiques formés à base de nitrure de bore, notamment sous forme de fibres, de films, de matrices, de revêtements, de poudres et de pièces massives.

Dans le cas le plus général, on pyrolyse alors le polymère dans une atmosphère inerte, sous vide, ou sous ammoniac, à une température allant de 100°C à 2000°C jusqu'à ce que le polymère soit converti entièrement en une céramique à base de nitrure de bore.

Le polymère, avant pyrolyse, peut également être mis en forme par filmage, par moulage ou par filage par exemple. Dans le cas où l'on désire obtenir des fibres, le polymère est filé au moyen d'une filière classique, après fusion ou mise en solution du polymère, puis est pyrolysé entre 100°C et 2000°C sous vide, sous atmosphère inerte (argon ou azote) ou sous ammoniac en vue de sa transformation en nitrure de bore.

Il est préférable, après la mise en forme du polymère, afin d'améliorer la tenue thermique du polymère et d'augmenter ainsi les rendements lors de la pyrolyse ultérieure, de procéder à un traitement physique (thermique) ou chimique (hydrolyse) du polymère mis en forme.

Les exemples suivants illustrent l'invention sans en limiter sa portée.

Dans ces exemples:

Mn et Mw sont respectivement la masse molaire moyenne en nombre et en masse,
THF est le tétrahydrofurane, DMAC est le diméthylacétamide, NMP est le N-méthylpyrollidone, tr/min signifie agitation en tour par minute,

les pourcentages sont donnés en masse, sauf mentions contraires.

Les valeurs de Mn et Mw sont obtenues à partir des analyses faites par chromatographie par perméation de gel avec un mélange THF/DMAC de composition volumique 80/20 comme éluant et le polystyrène comme référence.

Ces valeurs obtenues et données de Mn et de Mw doivent être multipliées par 2,5 pour obtenir les valeurs réelles de Mn et de Mw des polyaminoborazines obtenues.

## Exemple 1

55,0 g de B-tris(propylamino)-borazine sont introduits dans un réacteur ouvert de 500 cm$^3$ sous atmosphère inerte (azote). L'agitation est assurée par une ancre dont la vitesse de rotation est de 3 tr/min. Le réacteur est ensuite immergé dans un bain métallique à 100°C dont la température s'élève à 220°C à raison de 1°C/min. On effectue ensuite un palier de 5 heures à cette température.

Au cours de l'essai, on ne réalise pas de balayage du réacteur par un courant d'azote; la propylamine produite reste dans le ciel du réacteur. La propylamine dégagée diffuse dans un courant d'azote et on receuille dans une cuve à eau où elle est dosée par de l'acide chlorhydrique 2N. A la fin du palier, la basicité dosée est de 5,57 éq/kg (maximum théorique = 5,96 éq/kg) soit un taux de conversion de 93,4 %. On laisse ensuite revenir à température ambiante. La perte de masse est de 32,9 % (maximum théorique = 35,2 %).

Malgré le taux de conversion élevé, le polymère obtenu est fusible et soluble dans les solvants organiques usuels. Sa température de fusion, mesurée au banc Kofler, est d'environ 115°C. Dans ces conditions, le polymère présente des Mn et Mw respectivement de 1040 et 1460.

La figure unique correspond à une courbe du cumul pondéral (exprimé en pourcentage) en fonction du Log de M, M représentant la masse molaire moyenne, obtenue par chromatographie par perméation de gel.

La figure unique correspond au chromatogramme du polymère obtenu.

## Exemple 2

53,3 g de B-tris(propylamino)-borazine sont polycondensés dans des conditions analogues à celles de l'exemple 1. La température du palier est de 240°C et celui-ci dure 4 heures. La basicité dosée est de 6,13 éq/kg et la perte de masse de 35,65 %.

Le polymère présente une température de fusion de 170°C et des Mn et Mw respectivement de 1300 et 2200.

## Exemple 3

53,2 g de B-tris(propylamino)-borazine sont polycondensés dans des conditions analogues à celles de l'exemple 1. La température du palier est de 180°C et celui-ci dure 14 heures. La basicité dosée est de 4,21 éq/kg et la perte de masse de 24,1 %.

Le polymère présente une température de fusion inférieure à 20°C et des Mn et Mw respectivement de 920 et 1180.

## Exemple comparatif 4

55,8 g de B-tris(propylamino)-borazine sont introduits dans le réacteur ouvert de 500 cm$^3$. La programmation de température est identique à celle de l'exemple 1 (100 à 220°C à 1°C/min puis palier de 5 heures à 220°C). Toutefois, au cours de cet essai, on effectue un balayage du ciel du réacteur par un courant d'azote de 5 l/h. A la fin du palier, la basicité dosée est de 6,16 éq/kg et la perte de masse atteint 36,4 %.

Le polymère obtenu dans ces conditions présente une température de fusion de 230°C et est peu soluble dans les solvants organiques (DMAC, NMP), la partie soluble du polymère possède des Mn et Mw respectivement de 1470 et 3230.

## Exemple 5

59,5 g de B-tris(méthylamino)-borazine sont polycondensés dans des conditions analogues à celles de l'exemple 1. La température du palier est de 200°C et celui-ci dure 17 heures. La perte de masse est de 27,5 % (maximum théorique = 27,8 %), soit un taux de conversion de 99 %.

Le polymère obtenu présente une température de fusion de 220°C et des Mn et Mw respectivement de 810 et 1230.

## Exemple 6

1- Polycondensation

Dans un réacteur ouvert de 500 ml on introduit, sous azote, 56,7 g de B-tripropylaminoborazine.

L'agitation est assurée par une ancre dont la vitesse de rotation est de 3 tr/min. L'ensemble est inerté par un courant d'azote (5 l/h) dans le ciel du réacteur. Ce dernier est immergé dans un bain métallique à 100°C puis la température du bain est montée jusqu'à 220°C à raison de 1°C/min. On effectue ensuite un palier de 2 heures 45 minutes à cette température.

Au cours de la réaction, on ne réalise pas de balayage du réacteur par un courant d'azote, la propylamine produite reste dans le ciel du réacteur. La propylamine dégagée est dosée par de l'acide chlorydrique 2N de la même façon que dans l'exemple 1.

A la fin du palier, le dégagement de propylamine correspond à 4,85 éq/kg, soit un taux de conversion de 81 %.

On laisse ensuite revenir à température ambiante. Après craquage dans un bain acétone/carboglace, la polymère présente une température de ramollissement de 50°C et de fusion de 80°C mesurées au banc Kofler.

Le précurseur obtenu est laissé dans le réacteur et l'on reprend le chauffage dans les conditions données dans le tableau suivant :

| TEMPERATURE (°C) | VITESSE D'AGITATION (tr/min) | DUREE (h) | DEGAGEMENT PROPYLAMINE (éq/kg) |
|---|---|---|---|
| 150 | 3 | 3 | 0 |
| 150 | 180 | 4 | 0,04 |
| 180 | 3 | 4 | 0,04 |
| 180 | 180 | 1 | 0,04 |
| 190 | 180 | 0,5 | 0,04 |
| 200 | 180 | 1 | 0,04 |
| 220 | 180 | 0,5 | 0,18 |

A la fin de ce traitement thermique, le dégagement total d'amine est de 5,03 éq/kg, ce qui correspond à un taux de conversion de 84 %. Le polymère , de couleur brun foncé, présente alors une température de ramollissement de 105°C et de fusion de 130°C. Les masses moléculaires obtenues par GPC sont $M_n$ = 1100 et $M_w$ = 1800.

2- Filage du polymère obtenu

Le polymère est filé à l'état fondu, durant 45 minutes, à la température moyenne de 150°C à l'aide d'une buse qui, après filtration (filtre Fuji 0,5 μm et tamis métalliques 40 μm) et répartition, débouche sur une plaque filière percée de 7 trous de diamètre et de hauteur de 0,23 mm. Le débit total de polymère est de 0,226 cm³/min. Par étirage de filaments sous la filière, à la vitesse d'appel de 15 m/min, on obtient un fil de 7 filaments de diamètre unitaire 52,3 μm et de titre 290 dtex.

3- Pyrolyse des fibres

Les fibres sont pyrolysées sous ammoniac jusqu'à 1000°C, à une vitesse de 12°C/h avec un palier de 2 heures à cette température. La perte de masse n'est que de 46 %, tandis que pour une aminoborazine moins condensée, elle est habituellement de 54 à 57 %. Les filaments ont gardé leur individualité : la stabilité ne nuit donc pas à son aptitude à la réticulation.

Après pyrolyse à 1800°C sous argon, les fibres sont blanches. Elles ont une densité de 2,014 (théorique 2,28).

**Exemple 7**

Polycondensation en solution

Dans un réacteur ouvert de 250 ml, sous argon est ajouté 77g de B-tris(méthylamino)-borazine et 59g de NMP anhydre. Le mélange est agité à l'aide d'une ancre métallique à 200 tr/min jusqu'à ce que la solution devienne homogène et limpide. On chauffe ensuite la solution vers 180°C. Après 2 heures 35 minutes de ce traitement, on obtient un collodion transparent de viscosité voisine de 876 poises (à 23°C). Ce collodion est constitué de 55g de NMP et 73g de polyaminoborazines.

**Exemple 8**

Dans un réacteur ouvert de 250ml, on charge sous argon 59,5g de B-tris(méthylamino)-borazine. On immerge le réacteur, agité par une ancre métallique tournant à 3 tr/min, dans un bain à 100°C. La B-tris(méthylamino)-borazine fond rapidement. On élève la température du bain à 200°C en 10 minutes. La masse entre en ébullition, on laissse réagir 7 heures à cette température. Après refroidissement, on obtient un solide (41,3g) ayant une température de ramollissement de 190°C. La perte de masse est de 27,5 %.

Les masses moléculaires obtenues par GPC sont $M_n$ = 810 et $M_w$ = 1230.

Ce polymère est ensuite filé par voie fondue dans les conditions suivantes:

| | |
|---|---|
| Température d'extrusion (régulateur) | 225°C, |
| Température de filière (régulateur) | 235°C, |
| Débit total de polymère | 0,754 cm3/min, |

(suite)

| Débit par capillaire | 0,1077 cm3/min, |
|---|---|
| Temps de séjour à l'état fondu | 15 minutes, |
| Vitesse de passage aux capillaires | 2,593 m/min, |
| Vitesse maximale d'appel | 343 m/min, |
| Demi angle de croisure | 7°, |
| Taux d'étirage maximal théorique | 132, |
| Diamètre minimum théorique | 20 µm, |
| Taux d'étirage maximal mesuré | 370, |
| Diamètre minimum mesuré | 12 µm. |

Le polymère s'extrude sans difficulté. La stabilité à l'état fondu du polymère est au moins supérieure ou égale à 15 minutes. La qualité du fil, en sortie de filière, permet de le déposer sur un support avec un demi-angle de croisure de 7°. La qualité du fil est également très satisfaisante d'aspect.

**Revendications**

1. Procédé de préparation de polyaminoborazines du type consistant à polycondenser thermiquement des aminoborazines trifonctionnelles de structure cyclique de formule (1) :

$$[-B(NR_1R_2)-NR_3-]_3,$$

formule (1) dans laquelle $R_1$, $R_2$ et $R_3$, identiques ou différents, représentent l'hydrogène, un radical alkyle saturé ou insaturé ou un radical aryle, procédé dans lequel, dans le but,d'obtenir des polyaminoborazines homogènes, la réaction de polycondensation est réalisée à l'équilibre.

2. Procédé selon la revendication 1, caractérisé en ce que on utilise des aminoborazines trifonctionnelles de formule (1) dans laquelle $R_3$ est l'hydrogène et/ou $R_1$ et $R_2$ sont des radicaux alkyle, de préférence saturés.

3. Procédé selon la revendication 1 ou 2, caractérisé en ce que on utilise des aminoborazines trifonctionnelles de formule (1) dans laquelle $R_1$ et $R_2$ sont des radicaux alkyle saturés de $C_1$ à $C_4$.

4. Procédé selon l'une quelconque des revendications précédentes, caractérisé en ce que la température et la pression partielle en amines produites lors de la polycondensation sont contrôlées.

5. Procédé selon la revendication 4, caractérisé en ce que l'équilibre est réalisé par augmentation de la température, si on laisse la pression partielle en amines produites augmenter.

6. Procédé selon l'une quelconque des revendications précédentes, caractérisé en ce que la polycondensation thermique des aminoborazines est réalisée à une température comprise entre 150 °C et 350 °C, de préférence à une température comprise entre 200 °C et 250 °C.

7. Polyaminoborazines susceptibles d'être obtenues par la mise en oeuvre d'un procédé selon l'une quelconque des revendications précédentes.

8. Utilisation des polyaminoborazines susceptibles d'être obtenues par la mise en oeuvre d'un procédé selon l'une quelconque des revendications 1 à 6 pour la fabrication de produits céramiques formés à base de nitrure de bore.

**Patentansprüche**

1. Verfahren zur Herstellung von Polyaminoborazinen, bei dem man trifunktionelle Aminoborazine mit ringförmiger Struktur der Formel (1)

$$[-B(NR_1R_2)-NR_3-]_3$$

thermisch polykondensiert, wobei in der Formel (1) die Reste $R_1$, $R_2$ und $R_3$, identisch oder verschieden, jeweils Wasserstoff, einen gesättigten oder ungesättigten Alkylrest oder einen Arylrest darstellen, wobei bei dem Verfahren die Polykondensationsreaktion im Gleichgewicht durchgeführt wird, um homogene Polyaminoborazine zu erhalten.

2. Verfahren nach Anspruch 1, dadurch gekennzeichnet, daß man trifunktionelle Aminoborazine der Formel (1) verwendet, in der $R_3$ Wasserstoff ist und/oder $R_1$ und $R_2$ Alkylreste, vorzugsweise gesättigte Alkylreste, sind.

3. Verfahren nach Anspruch 1 oder 2, dadurch gekennzeichnet, daß man trifunktionelle Aminoborazine der Formel (1) verwendet, in der $R_1$ und $R_2$ gesättigte $C_1$-$C_4$-Alkylreste sind.

4. Verfahren nach einem der vorhergehenden Ansprüche, dadurch gekennzeichnet, daß die Temperatur und der Partialdruck in bezug auf die bei der Polykondensation erzeugten Amine kontrolliert (gesteuert) werden.

5. Verfahren nach Anspruch 4, dadurch gekennzeichnet, daß das Gleichgewicht durch Erhöhung der Temperatur erreicht wird, wenn man den Partialdruck in bezug auf die erzeugten Amine ansteigen läßt.

6. Verfahren nach einem der vorhergehenden Ansprüche, dadurch gekennzeichnet, daß die thermische Polykondensation der Aminoborazine bei einer Temperatur im Bereich zwischen 150 °C und 350 °C, vorzugsweise bei einer Temperatur im Bereich zwischen 200 °C und 250 °C, durchgeführt wird.

7. Polyaminoborazine, erhältlich durch ein Verfahren nach einem der vorhergehenden Ansprüche.

8. Verwendung von Polyaminoborazinen, erhältlich durch ein Verfahren nach einem der Ansprüche 1 bis 6, zur Herstellung von keramischen Produkten, die auf Basis von Bornitrid gebildet sind.

## Claims

1. A process for the preparation of polyaminoborazines, consisting of thermally polycondensing trifunctional aminoborazines with a cyclic structure with formula (1):

$$[-B(NR_1R_2)-NR_3-]_3$$

where $R_1$, $R_2$ and $R_3$, which may be identical or different, represent hydrogen, a saturated or unsaturated alkyl radical or an aryl radical, in which process the polycondensation reaction is carried out at equilibrium in order to obtain homogeneous polyaminoborazines.

2. A process according to claim 1, characterized in that trifunctional aminoborazines with formula (1) are used in which $R_3$ is hydrogen and/or $R_1$ and $R_2$ are alkyl radicals, preferably saturated alkyl radicals.

3. A process according to claim 1 or claim 2, characterized in that trifunctional aminoborazines with formula (1) are used in which $R_1$ and $R_2$ are saturated $C_1$ to $C_4$ alkyl radicals.

4. A process according to any one of the preceding claims, characterized in that the temperature and the partial pressure of the amines produced during the polycondensation reaction are controlled.

5. A process according to claim 4, characterized in that equilibrium is achieved by increasing the temperature if the partial pressure of the amines produced is allowed to increase.

6. A process according to any one of the preceding claims, characterized in that thermal polycondensation of the aminoborazines is carried out at a temperature which is in the range 150°C to 350°C, preferably at a temperature which is in the range 200°C to 250°C.

7. Polyaminoborazines obtainable by carrying out a process according to any one of the preceding claims.

8. Use of polyaminoborazines obtainable by carrying out a process according to any one of claims 1 to 6 for the production of formed ceramic products based on boron nitride.